# EUROPEAN PATENT APPLICATION

(11) **EP 4 009 692 A1**
(43) Date of publication of application: **08.06.2022**
(21) Application number: 20211620.8
(22) Date of filing: 03.12.2020
(51) Int. Cl.: H04W 24/10, H04W 36/30, H04W 88/02

(54) **IMPROVED MOBILITY MANAGEMENT FOR NB-IOT USER EQUIPMENT PRIOR TO RADIO LINK FAILURE**

(71) Applicant: THALES DIS AIS Deutschland GmbH, 81541 München (DE)
(72) Inventor: BREUER, Volker, 16727 Boetzow (DE); WEHMEIER, Lars, 14612 Falkensee (DE)
(74) Representative: Thomas, Christine Marie Catherine

(57) **Abstract**

The present invention relates to a method to manage mobility prior Radio Link Failure in a NarrowBand-Internet of Things NB-loT user equipment (UE) storing a previously received System Information Block information SIB and having a data sessions in a NarrowBand-Internet of Things network, said method comprising the steps of, in the NB-loT user equipment (UE):
- monitoring current transport conditions measurements of current data session connection with a current serving cell (B1) against an investigation threshold (IT(S));
- monitoring a buffer status to evaluate the amount of data still needing to be transferred or received and
- initiating, itself, at the NB-loT user equipment (UE), investigation measurements on neighbor cells (B2,Bi) of the NarrowBand-Internet of Things network as listed in the stored System Information Block when at least the investigation threshold (IT(S)) is crossed prior Radio Link Failure.

## Description

### FIELD OF THE INVENTION

The present invention relates to a method to manage mobility prior Radio Link Failure in a NarrowBand-Internet of Things NB-loT user equipment (UE) storing a previously received System Information Block information SIB and having a data sessions in a NarrowBand-Internet of Things network.

The invention also pertains to a device using said method.

### BACKGROUND OF THE INVENTION

The invention relates to the field of the NarrowBand-Internet of Things. Narrowband Internet of Things (NB-IoT) is a Low Power Wide Area Network (LPWAN) radio technology standard developed by 3GPP to enable a wide range of cellular devices and services.

NB-loT focuses specifically on indoor coverage, low cost, long battery life, and high connection density. Mobility is based upon Radio Link Failure (RLF), meaning that, once a connection fails activities are started. Consequently, the NB-loT user equipment (UE) stays connected to the current serving cell unless the connection breaks.

NB-loT will be used in conjunction with LTE and 5G. So far there is a re-establishment process which schematically comprises the following steps: the user equipment stays connected until connection breaks and then, once the connection is broken, the user equipment starts to initiate neighbor cell measurements to find a new suitable cell and initiated connection setup to said new cell by indicating RLF. This cell search takes 10-20 seconds. Then the user equipment signals RRC connection re-establishment to the new Node and the new node tries to fetch the context from the old Node before the connection is resumed. In total this takes 30 seconds to one minute.

Then the last cell which served the UE is indicated and hence the approached eNodeB performs a context fetch. Finally the new node resumes the context of said UE.

The before mentioned process is more time consuming than handover but from UE perspective less resource and power consuming which is relevant for NB-loT devices. In addition, such nomadic mobility fits well to a device which was initially designed to be available for small delay tolerant data transfer. Indeed, during transfer of small amount of data, it is less relevant that a mobility situation could occur, for example leaving coverage area of the current serving cell.

In handover, according to a very different process, this is the base station that requests the UE to start neighbor cells measurements while giving a list of neighboring cells. This does not wait for any failure of the link. If the UE finds a cell, it then informs the base station. The cell can then thus forward the context to the next cell in order for the reestablishment to be shortly effective.

While not being equipped with handover abilities, NB-loT is seen by some companies to become a GSM replacement. Hence improved mobility procedures are needed while respecting the restriction as defined in NB-IoT. Handover as such is out of scope giving earlier standard agreements and also limited capability of NB-IoT.

As a consequence the current Radio Link Failure mobility is intended to be improved. Further alternative and advantageous solutions would, accordingly, be desirable in the art. The invention also aims to improve the RLF re-establishment time by considering best effort assumptions in the network.

### SUMMARY OF THE INVENTION

The present invention aims at improving the behavior of an NB-loT UE in case of mobility.

The present invention is defined, in its broadest sense, as a method to manage mobility prior Radio Link Failure in a NarrowBand-Internet of Things NB-loT user equipment (UE) storing a previously received System Information Block information SIB and having a data sessions in a NarrowBand-Internet of Things network, said method comprising the steps of, in the NB-loT user equipment:
- monitoring current transport conditions measurements of current data session connection with a current serving cell against an investigation threshold;
- monitoring a buffer status to evaluate the amount of data still needing to be transferred or received and
- initiating, itself, at the NB-loT user equipment, investigation measurements on neighbor cells of the NarrowBand-Internet of Things network as listed in the stored System Information Block when at least the investigation threshold is crossed prior Radio Link Failure.

With the invention, the user equipment is in charge of deciding to make the measurements at its own side. It makes the triggering of the measurements dependent of its own environment. Indeed, also in NB loT device it is possible to start neighbor cell measurements prior connection break according to today's standard. This is a new procedure where the user equipment performs measurements prior RLF. However the decision when to perform these measurements depends on a threshold value upon which measurements are started. Said measurement can be a configuration value provided by the network considering the amount of overlap the current serving cell has to its neighbor cells, i.e. the threshold is a metric for a certain time prior RLF may occur.

In an advantageous embodiment, the investigation measurements are performed during downlink gaps in NB-loT communication frame structure.

In fact, this are the downlink gaps in the frame structure, as explained below in the description of the invention, that are sufficient to perform the requested measurements prior RLF while the camped cell is still the serving cell. According to the standard, system information block (SIB) has been received and thus neighbor cells are known. Hence the UE could start, based on the UE implementation of the invention, neighbor cell measurements prior RLF. It would be desirable by network manufacturers and operators intending to have NB-loT as a GSM replacement. The invention will enable minimal effort for the device while offering this possibility.

According to an advantageous feature, several investigation thresholds are defined depending on the nature of the service as performed in the current data session.

With this feature, the UE evaluates the serving cell regarding to the service performed in the data session. A service delay tolerant data session will get a very low investigation threshold for the UE not to trigger costly measurements while the service does not necessitate it. It enables the UE to answer the following questions: for the current service how much data do I still critically need to transfer and is the transfer speed still reasonably good?

With this feature, the UE is aware that, for example during a software download, it can resume it at the point of a RLF later on without harm and it will not trigger the measurements. The threshold will be set very low and no measurement will be triggered for a software download.

For a short report transmission, for example in the case the UE is a meter, it will also not trigger any measurements.

For a position tracking service, the investigation threshold will be very high and measurements will be triggered.

Advantageously, the investigation measurements are initiated only when an evaluated amount of data in the buffer status still needing to be transferred or received is above a buffer status threshold.

Here, the user equipment also considers its buffer status, i.e. what is the amount of data it still needs to transmit and considering under current transport conditions the time this may take. This embodiment enables the user equipment to estimate due to the buffer status how many data it has still to send or to receive at what speed. It can thus estimate how long it will take and then it can estimate whether the RLF may occur before the data session to terminate. If not finalized very soon, the user equipment uses gaps in the communication frame structure to perform measurements on neighbor cells it has read in the SIB. If it evaluates that the session will terminate before the RLF it does not trigger any measurements.

This enables the user equipment to take into account the transfer speed as currently observed and the time it will takes, under such transfer speed, to have all the data transferred. The user equipment can estimate the throughput that it achieves. When it is getting worse, more and more repetitions are required. The user equipment is aware of that because the buffer status give the transferred payload. It enables to trigger the resource consuming measurements only in case the remaining data are expected not to be transferred before a radio link failure likely occurs. The buffer status threshold is determined depending on the kind of user equipment and enables to take into account the nature of the user equipment and/or its environment.

Typically for a static user equipment, the buffer status threshold will be very high, signifying that the measurements will not been triggered even if the quality of the link is getting worse and worse and even if it remains many data to transfer and even if the service would require a continuity of service.

It is here noted that the first threshold on the quality of the communication with the serving cell can also be set very low insuring that no measurement will ever be triggered.

According to an advantageous feature, several buffer status thresholds are defined depending on the nature of the service as performed in the current data session.

With this feature again, the UE evaluates the serving cell regarding to the service performed in the data session. It is here noted that this feature is presented independently of the investigation threshold. However in equivalent embodiment to this, a single investigation threshold on the transport conditions but made dependent on a buffer status is addressed according to the invention. The invention thus covers a variable investigation threshold, function of at least a buffer status. The investigation threshold can be further made dependent on other status and thus being a function of a combination of several parameters relative to the nature of the UE, to the environment and to the service performed in the concerned data session.

According to another advantageous feature of the invention, the method comprises the further steps of, for the user equipment, determining internally a re-establishment target cell in case of Radio Link Failure occurs to current serving cell depending on investigation measurements on neighbor cells, and, for the user equipment, sending to the serving cell an information on the re-establishment target cell.

This enables not to report the measurements to the serving cell but only an identifier of a targeted cell to take over for the data session. Then the serving cell can inform the other cell.

According to a feature of the invention, the method further comprises a step of, for the serving cell, indicating to the user equipment, that the re-establishment target cell is not a suitable candidate for re-establishment.
This feature enables to process cases where the re-establishment target cell is barred (or for other reasons not accessible i.e. overload restricted for operator use) while the user equipment has no possibility to be aware of as having not yet read SIBs so far. According to another feature of the invention, the method further comprises a step of, for the user equipment, resuming the neighbor cell search for a suitable candidate in case a non-suitable indication was provided by the serving cell for the information on the re-establishment target cell.
This features enables the user equipment to restart measurements to find a suitable cell.

According to a feature of the invention, the method further comprises a step of, for the user equipment, sending a user equipment identifier to the re-establishment target cell for subsequent establishment of a data session with the target cell.

This feature enables the next serving cell to be informed in advance of the establishment of a link with the user equipment as thus identified.

Advantageously, the method further comprises a step of, for the user equipment, sending a communication context including already correctly received or transmitted packets to the re-establishment target cell for subsequent establishment of a data session with the target cell.

The pre network context provisioning for RLF enables a quick and efficient reestablishment of the communication and avoids repetition in the packet transfer. There are multiple options for the context to be sent. It can be an entire context, only unacknowledged packets... The user equipment can also indicate missing Packet Data Convergence Protocol Service Data Units (PDCP SDUs) by a binary matrix (TS36.223 section 5) etc...

It can also be the target cell that evaluates whether a certain data PDU (Protocol Data Unit) was already received and otherwise requesting said PDU again. Upon re-establishment of the context, the data session is resumed by applying means for minimizing re-transmissions of exchanged data.

The data context evaluate which packets were not acknowledged and enables to only re-transmit those that were not acknowledged, or provide lacking report on Packet Data Convergence Protocol (PDCP) service data units. By context forwarding, the time for connection re-establishment with cause RLF can be further reduced besides just by performing measurements prior RLF occurs. Moreover for the re-establishment candidate cell, as it is not known when RLF occurs the current serving cell would start data forwarding via said connection, in UP/DL directions and indicate what was last successful received package. In a first approach this may refer to IP or non-IP packets, i.e. above the radio layers. However also SDUs from PDUs forwarding of RLC/RRC layer would allow in case of RLF occurrence to re-assemble the packets correctly and not start in the new node with the entire last IP packet. It will also avoid to transmit again packets which were successfully received but nor confirmed or out-of a large PDU while only one SDU is missing, and hence avoid re-transmission of said packets. Such behavior besides controlled neighbor cell measurements and context forwarding instead of context fetch and including data packet forwarding reduces the outage time to a minimum possible. This feature enables a preparation of a communication link with the target re-establishment cell before any radio link failure occurs, i.e. the current serving BS provides UE context information towards the new suitable serving BS.

Advantageously, the method further comprises a step of, for the user equipment, sending a Radio Ressource Control connection re-establishment request to the target reestablishment cell with a cause "Radio Link Failure" for reestablishing communication in the NB-loT network for the user equipment.

Said request contains related information to the User Equipment context used in previous serving cell.

In an implementation of the invention, transport conditions measurements comprises measurements of at least one of the following parameters:
a. delay-tolerance of the ongoing service
b. QoS degradation of the current connection
c. UE mobility speed.
d. Applied CE level/number of repetitions
e. CE level change
f. Re-transmission rate
g. a configuration value provided by the network considering the amount of overlap the current serving cell has to its neighbor cells.

One or several of these parameters, independently or in combination can be used in the transport conditions measurement that is monitored against the investigation threshold of the invention. The RACP reference signal can be used to evaluate the link reception quality at the UE as all the cells have the same power DB value at transmission.

Thus, as a conclusion here, with the invention, the triggering of neighbor cells measurements by the user equipment is made dependent on service, on buffer status, on transport conditions and thus also on mobility of the UE. Measurements to be performed for NB-loT during connected mode can be considered as known. However, threshold control and usage of such measurements and reports are new and original features defined according to the invention.

The invention allows for improved connected mode mobility for NB-loT being more handover like, than nomadic mobility based on RLF. That topic is important for current developments wanting one version of NB-loT to achieve GSM like characteristic including mobility behavior.

The invention allows improved connected mode mobility for NB-loT being more handover like, than nomadic but respecting the reduced NB-loT parallel measurement capabilities in connected mode.

According to an implementation of the invention, the method to manage mobility comprises the following steps, preliminarily to the establishment of the data session, of, for the serving cell:
- determining an investigation threshold for the data session;
- sending the determined investigation threshold in the system information block to the user equipment; and, for the user equipment,
- reading the investigation threshold to be used for the data session.

This enables the base station to determine an investigation threshold to be applied to the coming data session by the user equipment. It enables to have a dedicated and specific investigation threshold for the service that is intended to be performed during the coming data session.

The present invention also relates to a NarrowBand-Internet of Things NB-loT User Equipment (UE) storing a previously received System Information Block information SIB and being suitable to establish data sessions in a NarrowBand-Internet of Things network and to manage mobility prior Radio Link Failure, said NB-loT user equipment comprising:
a network measurement module to perform current transport conditions measurements of current data session connection with a current serving cell against an investigation threshold and investigation measurements on neighbor cells;
a buffer status register to evaluate the amount of data still needing to be transferred or received
a mobility management module suitable to:
   monitor current transport conditions measurements of current data session connection with a current serving cell against an investigation threshold;
   monitor a buffer status to evaluate the amount of data still needing to be transferred or received and
   initiate, itself, at the NB-loT user equipment, investigation measurements on neighbor cells of the NarrowBand-Internet of Things network as listed in the stored System Information Block when at least the investigation threshold is crossed prior Radio Link Failure.

Such a user equipment implements the method of the invention. Of course, the invention also relates with a user equipment implementing any one of the above mentioned other features of the method of the invention.

As a conclusion, NodeB broadcasts a threshold when measurements should be started for long lasting session, when the user equipment reaches threshold it evaluates whether worth to start measurements or not, if no measurements are started because one of the following reasons: short session, delay tolerant or static method ends.Otherwise the user equipment searches for re-establishment candidate. If found, it reports to serving cell,which forwards indication and user equipment context to new Node. Then, in case of RLF, the user equipment establishes connection to said node and context is already available and session immediately resumed.

This procedures also takes ∼30sec, but the interruption time is only a few seconds, as neighbor cell was searched in advance and once establishment starts user equipment context is already there.

Means we are designing anew establishment procedure, which is very fast, but costs a lot of power. So the user equipment shall evaluate whether to execute of not, based on the current ongoing session primitives.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates the environment of a UE implementing the method of the invention;
- Figure 2A and 2B shows measurements and start of other cell search for LTE and for NB-IoT;
- Figure 3 schematically shows the measurements as performed according to the invention and schematically the functioning of the invention;
- Figure 4 shows a time diagram of the method of the invention according to a preferred embodiment;
- Figure 5 shows a structure of a NB-loT communication frame where the measurements of the invention can occur.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

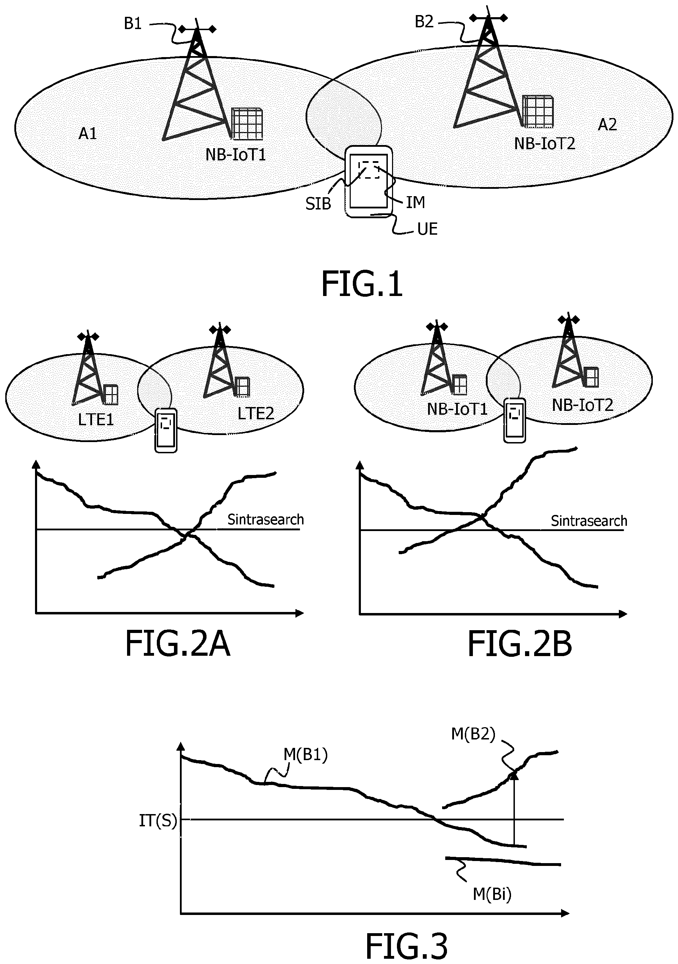

Figure 1 schematically shows a User Equipment UE in mobility between two base stations B1 and B2 having NBIoT capabilities. Their respective areas of service are illustrated by ovals A1 and A2.

While migrating from the area A1 to the area A2, the user equipment UE, being in a data session with the base B1, suffers from a lowering of the quality of its link with base B1.

Prior establishing the data session in course, the UE received from the base B1 a System Information Block SIB that it has stored in an internal memory IM.

The user equipment UE has thus a data session with B1 and earlier read corresponding SIBs, including neighbor cell list and, in a preferred embodiment, an investigation threshold when evaluation should be started.

Here the investigation threshold is thus determined and provided per indicated node carrier frequency by the base station B1. It is here noted that the investigation threshold can also be a general value in some embodiments.

The threshold provided by the network is advantageously related to the network deployment/layout. The network knows whether there are neighbor cells around and from which reception level onwards it makes sense for a user equipment to scan for them.

In LTE technology, radio signal power decreases from emitting base station in a radial way and, for mobility, it is needed to monitor neighbor cells, report them and perform handover, so cells have a certain overlap. NB-loT has in principle same overlap, even a bit larger due to higher power. This is illustrated on figure 2A and figure 2B where a decrease of radio link power is shown respectively in LTE technology and in NB-loT technology in relation with a Sintrasearch threshold of the prior art is shown. It makes sense in said overlap area to start the measurements.

Advantageously the network sets the threshold to a value where the neighbor cell should have same magnitude of power as serving cell. Said threshold setting is known from idle mode mobility, i.e. Sintrasearch and Sintersearch. However, this is not sufficient for RLF mobility as it cannot differentiate the various user equipment's and their needs. According to the invention, the NBIoT network sets a threshold that can be similar to the threshold already used in other contexts, but once user equipment reaches said threshold, it is the one to decide whether to perform measurements or not. Several trivial ways how to define a threshold when to start the measurements, this is known from other RRC states but the exact value depends on the network layout and cell deployment.

As an example, the value is adapted for outdoor devices needing mobility and will not help for indoor. An indoor device would always be below said threshold and it thus needs said user equipment mechanism for connected mode mobility/RLF. Also when hitting said threshold and moving on, it still takes a while till signal disappears and connection breaks so, for short transmissions, it is also not useful for NB-lot to start measurements.

In addition it needs to be noted here, that these thresholds may be sufficient for idle mode, where all UEs have same target, i.e. maintaining camping to one base station. However, in connected mode depending on session type, short session, long session delay tolerant data exchange or others there would be a need for different thresholds, if it would not be up to the UE to decide on when to start the measurements because these thresholds are cell specific and cannot differentiate UEs having different needs;
Figure 3 shows the evolution of the quality of the link of the UE with the base B1 through a measurement M(B1). This measurement M(B1) can be one or a combination of the below listed parameters observed while a UE is linked with a base:
a. Delay-tolerance of the ongoing service
b. QoS degradation of the current connection
c. UE mobility speed.
d. Applied CE level/number of repetitions
e. Coverage Enhancement level change
f. Re-transmission rate
g. An evolving configuration value provided by the network considering the amount of overlap the current serving cell has to its neighbor cells.

In a particular example, the quantity is a measurement as defined in TS36.214 section 5.1.26 Narrowband Reference Signal Received Power (NRSRP) or 5.1.27 Narrowband Reference Signal Received Quality (NRSRQ) where applicability would need to be extended for RRC-Connected mode so threshold is a dB or dBm value as defined with respect to the reference signal. With the invention, a measurement based on reference signal, so far only existing for idle mode, is used for connected mode.

It is here noted that the measurement M(B1) is schematically shown as decreasing but it could be as well an increasing parameter as soon as it witnesses of the quality of the link between the user equipment and the current serving base B1.

An investigation threshold IT(S) is defined on the measurement M.

Simplest way is to compare measured values of NPRSCP or NPRSRQ for the serving cell and how they decrease and what is defined for said cell with respect to suitability criteria for the serving cell.

In addition radio link monitoring is in general known, for example TS36.133 Chapter 7.6 and especially 7.6.1. When the user equipment UE receives a radio link, it shall be able to receive and stay connected till a lower threshold is reached which leads to RLF, however a suitable threshold prior loosing said link is advantageously an upper boundary X-dB above said RLF connection loss threshold.

Furthermore degradation can be identified by number of repetitions is increasing for forthcoming transmission, i.e. the user equipment enters coverage enhancement mode. It starts with 2, 4, 8, 16 and 32 repetitions where the network does not want to go for higher number of repetitions or the user equipment is not granted for higher number of repetitions. Payload of the user is measured at PDN-Gateway, hence repetitions at air interface normally does not contribute and just cost network capacity. There is thus an allowed threshold for a user related to the number of repetitions allowed to sue as repetition harms network capacity at no throughput or cost.

It is visible on figure 3 that the user equipment received power drops below the indicated measurement investigation threshold IT(S) and the user equipment data session will continue for a certain time.

Evaluation of continued data session is original according to the invention. With the triggering of measurements according to the invention, the user equipment UE terminating its session soon would only waste a bit of power.

To avoid to waste power an additional test is performed according to the invention in relation with the buffer status. It becomes then possible to trigger the measurements only when the user equipment's buffer is above a certain threshold, when the user equipment buffer is above a certain threshold and the quality of service or throughput below a certain value, the rate in change of quality of service or throughput drop.

Once the measurement M(B1) is, in this example, below the threshold T, an investigation measurement M(B2) is started for at least one other base, here B2, as listed in the previously stored SIB.

If the user equipment measures the serving cell being below the threshold and has evaluated to start neighbor cell measurements, e.g. large amount of data still in the buffer, or the network indicated a buffer status non-zero, i.e. the buffer at base station side still full, and has found a neighbor cell above said threshold, the Physical Cell ID (PCID) is reported by the user equipment to the serving base station.

Indeed the NB-lot user equipment does not read SIBs during data session but the SIB was read prior starting the data session and as no RLF occurred, the SIBs previously read in idle mode are still valid. Information it has stored are, at least, neighbor cell information. The user equipment also knows the investigation threshold to start the investigation.

It is here noted that it can be the base station that sent the investigation threshold in the SIB. In such a case, the base station B1 let the UE managing the triggering of the neighbor cells measurements but the triggering is based on thresholds that are defined and controlled by the base station. It enables the base station to adjust a threshold to be applied for a specific service.

It is here noted that several base stations can be investigated by measurements as illustrated by the measurement M(Bi) on figure 3.

As data session continues, the user equipment starts measurements upon next gap and, once the user equipment has found a suitable cell as re-establishment candidate if RLF would occur now, the user equipment UE reports said cell to the serving cell B1. The current serving cell receives the potential candidate in which the user equipment would try to reuse the connection once broken after RLF. Upon receiving such cell, the base station B1 would contact said cell via an X2/N2 interface towards said cell, eNodeB-eNodeB. The base station B1 indicates to base station B2 possible candidate approaching with RLF re-establishment. Via said interface, it would preferably provide the UE ID and context indicating that said UE may resume its context in said cell and ask for a context fetch.

Providing context in advance instead of waiting for base station B2 to fetch the context from node B1 improves mobility time and reduces outage time and is original. In addition the node B1 may also mirror data packets provided to the user equipment to node B2 as a data forwarding or provides reports which packets were successfully received from the UE

Upon receiving user equipment indication in node B2, node B2 can confirm being ready to take over the context, or indicate that it is restricted/barred or overloaded. Also, if this is the case, such information may be transferred also to user equipment indicating that base station B2 not suitable for RLF, i.e. to avoid unsuccessful establishment attempts by the user equipment.

This is especially advantageous, as the user equipment may not be able to read any neighbor cell SIBs during the ongoing data session with the serving cell even when being on same frequency, due to its limited capabilities. Only after RLF has occurred, the user equipment would start reading SIBs of the target cell and it would become aware that said cell is not a suitable re-establishment candidate as it is barred or for operator use only. And hence, in such a situation, the user equipment needs to start a search again. However, doing previously measurements to evaluate several candidates as potential re-establishment candidates, for the case one of them would be barred, would also be a waste of energy.

Hence the proposed indication on potential re-establishment candidate to the still serving base station to avoid such failures is also an advantageous enhancement. Only in case the indicated cell may not be a suitable candidate, the base station may indicate to the user equipment to proceed to search another cell and continue the search.

If data session ends before RLF occurred at the user equipment nothing else happens and forwarded context/measurements or data are discarded after a certain time or explicit signaling. Also base station B1 can indicate to base station B2 that data session with the user equipment ended.

In a more advanced case, i.e. when the user equipment changes its direction and the target cell B2 would no more be visible, or drops below suitable criteria, and when there would still be data in the buffer, the user equipment may retrigger said search and find a new cell B3, which accordingly would be reported to the serving base station B1. As indicated above the serving base station B1 may indicate to this base station B3 that it is now suitable candidate and may also inform the previously targeted base station B2 that it is no more candidate for context re-establishment for said user equipment.

But in the likely case a re-triggering of the evaluation should not be necessary, as thresholds and evaluation should be such that RLF is the likely case to occur, as otherwise continuing measurements would also drain the battery.

If RLF occurs, the user equipment UE selects prior detected node B2 and performs re-establishment with cause RLF. It thus provides its identity and the identity of the previous serving node B1.

Then node B2 indicates context available, resumes the session and, if available, indicates what was the last packet correctly received by node B1 from the user equipment and forwarded and the UE indicates what was last successful received packet from node B1.

By use of the information data session is immediately resumed and duplicated packet transmission is avoided. With the invention, mobility based on RLF/nomadic mobility will nearly reach the performance of handover.

On figure 3, is illustrated a case where a switch from base B1 to base B2, illustrated by an arrow, is effective before any RLF. This enables to get continuity of service which can be a requirement for NB-loT to be extended to other applications than the ones it is currently used for.

The investigation measurements are advantageously triggered only in case there is still a minimum quantity of data to be still transmitted. Thus the invention also concerns the case where another threshold on the quantity of data is also monitored and crossed.

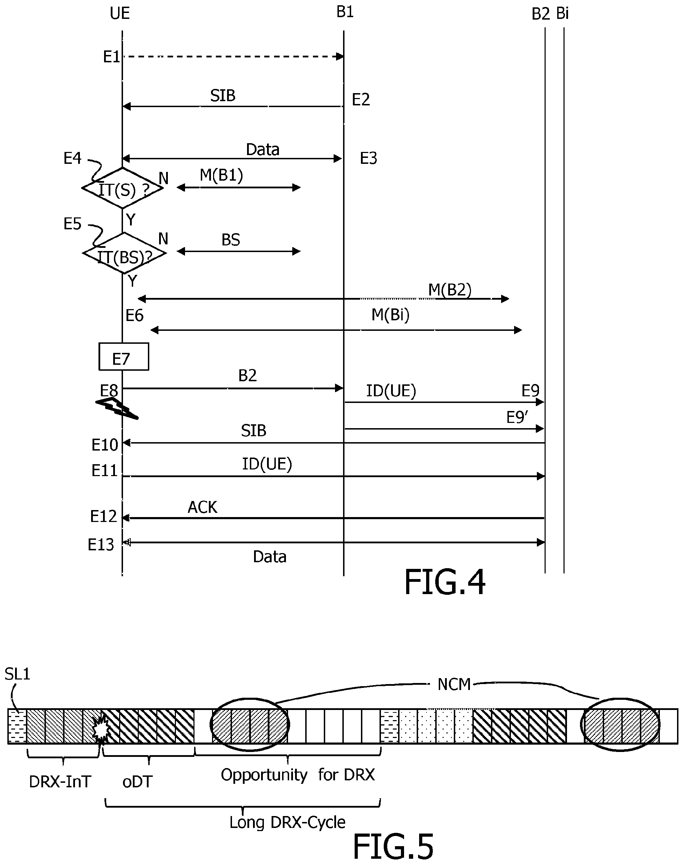

This embodiment is illustrated on figure 4 where a time diagram shows the different successive steps of the method of the invention.

On this figure, in a first step E1 a data session is requested by a user equipment UE at a serving cell, here B1.

The user equipment UE receives NRSRP/NRSQ from cell B1 being above a suitability criteria and momentary no better cell is found. With the establishment of the data session, the user equipment UE camps on cell B1 and, in a step E2, receives and stores related broadcast information/SIB from the serving cell B1 listing among other information a list of neighbor cells, here notably B2 and Bi for the example of figure 1. The system information block includes a threshold for NB-loT when sensible to perform neighbor cell measurements. Then the data session occurs, illustrated by E3. The user equipment UE is thus in a data exchange session with the network and the serving cell B1 is above said investigation threshold IT(S).

During the data session E3, measurements M(B1) relative to the link with cell B1 are performed at the UE.

Those measurements M(B1) are monitored, illustrated by a step E4 on figure 4, against the threshold IT(S) that defines a limit in the quality of the link with the serving cell B1 under which measurements on neighboring cells as listed in the SIB could be triggered.

In this step E4, as far as the measurement M(B1) is above the threshold IT(S) (case N of step 4), the data session is pursued without any other measurement. In the example shown, the measurements on neighboring cells B2 and Bi listed in the SIB are started as soon as the threshold T(S) has been crossed (case Y), thus once used radio link gets below threshold.

Otherwise the only measurements on the currently serving cell, here B1, is pursued.

However, according to a preferred embodiment of the invention, once the threshold IT(S) crossed, another test is performed before starting the measurements on neighboring cells. Accordingly, in a step E5, a buffer status BS of the data to be transmitted or received is compared to another threshold IT(BS).

Also, advantageously, in addition with the above two steps E5 and E6, the user equipment UE evaluates whether to perform neighbor cell measurements: is the UE static? If yes, do not do anything. Are the data delay tolerant? If yes, nothing is performed by the user equipment UE. If both were no, the user equipment UE estimates whether session will be finished prior radio link will fail. The buffer status low or high in the user equipment and serving cell B1, the degradation speed of the radio link or the increase in data repetitions are tested in steps E5 and E6.

For example, radio link will fail in 10 seconds if proceeding to degrade like currently, data transmission will take at least more than 10 seconds giving current speed or considering even degrading data transmission speed with degrading radio link. When this evaluation is negative, additional measurements with neighbor cells are started according to cell received in system information.

Thus if the threshold T(BS) relative to the buffer status BS is also crossed (case Y), then the measurements M(B2) and M(Bi) in this example, on neighboring cells B2 and Bi are started, as illustrated by a step E6 and free arrows towards B2 and Bi. Neighbour cell measurements are performed in the DL gaps as will be explained in the description of figure 5.

In this example, according to the measurements, in a step E7, the neighboring cell B2 is detected by the user equipment UE as a suitable and best fitted cell for a link to be established before radio link failure.

In a subsequent step E8, the user !equipment UE informs the serving cell B1 of the identified best neighboring cell B2 to take over in case of RLF as a target cell.

Then, the serving cell B1 informs the target cell B2 that it may be candidate for re-establishment candidate for the user equipment UE and provides at least an identifier ID(UE) of the user equipment UE in a step E9.

Data session is ongoing with cell B1 and packets are exchanged. Here radio link failure can occur, the link between the user equipment and the target cell will be quickly established (in a step E11 as detailed below) after receiving of system information block SIBs from the target cell B2 (in a step E10 as detailed below).

However, prior these steps the base station B1 may do the following:
The cell B1 then remarks that the user equipment UE disappeared and optionally wraps-up data in a step E9', i.e. provides non-acknowledged DL data, i.e. data send by the base station in downlink but not confirmed by the UE yet to the target cell B2 and informs the target cell B2 on correctly received UL packets but not acknowledged. When the radio link will be established, the user equipment UE will send information/summary on which packets in DL were last correct received and hence the new base station knows which of the forwarded data packets from BS1 it needs to transmit again and also indicates in case of UL packets received, which was not acknowledged yet. If the UE does not receive an indication that the packet was already correctly received in the previous cell, it will start transmission again or in case of HARQ resume the transmission and it will continue with same packet in different format. At the same time the cell B2 will know which packets were sent in DL but where confirmation is outstanding. Either the UE indicates that these packets were already correctly received in the previous cell (confirmation), or B2 will resume their transmission and provide them again.

Then the user equipment UE receives and reads required SIBs from cell B2 to communicate with B2 in step E10.

The user equipment then performs connection re-establishment procedure towards the cell B2 with cause RLF re-establishment in following steps.

In a step E11, the user equipment communicates with the new target cell B2 and requests re-establishment cause "RLF" including its identity which has to match with the identity received by the target cell B2 in step E9. The UE may optionally include data related to the user equipment UE data session i.e. which was the last block correctly received from BS1 but where no confirmation was send out. This is an optional enhancement similar to E9' to avoid re-sending of already correct received packets by the B2.

In a step E12, the data session is resumed by transmission of an ACK sent by cell B2 to the user equipment.

Data exchanges start in a step E13 either by starting to transmit with packets not being acknowledged by the previously cell B1 (UpLink case) or by the user equipment UE (DownLink case).

If information on correctly received packets and data was previously provided, session will be resumed based on said information.

Figure 5 shows a typical time structure for a communication frame where it is possible for the UE to make measurements between active data transmission. Such measurements can be performed during discontinuous reception gaps (DRX).

First, the UE is scheduled in a first slot SL1 and receives some data in next slots. A DRX-Inactivity timer DRX-InT is launched while the UE monitors PDCCH. It expires here after four slots as illustrated by a star on figure 4 and a long DRX cycle starts waiting for data.

During a first part, an onDuration Timer oDT runs where the UE monitors PDCCH. The onDuration Timer oDT is just a fraction of the DRX long cycle, where user equipment UE needs to receive something due to errors in previous transmission/reception. But afterwards there is a real DRX time, where measurement can be placed. It thus follows a period of opportunity for DRX where neighbor cell measurements NCM can take place as illustrated on figure 4.

Indeed, the invention takes the opportunity of existing gaps in frame structure to make measurements when the decision according to the invention is taken.

The UE is in any case adapted to make measurements with neighboring cells according to the invention as it is equipped with the necessary features to make them in idle mode. In connected mode, as seen on figure 4, there is time to do the measurements in NB-loT devices' communication frames when the device receives or transmit data. Indeed the device get certain time in-between transfer of data also in connected mode because the device needs to repeat all the things and in this time, the device can do then the measurements of the invention also in connected mode and while remaining NB-loT standard compliant. For example the device needs to send the same packet several times because it is in bad communication conditions, it will get 12 times to get the answer and in-between there are gaps as seen in the above presented frame structure. When no measurements are done according to the invention, the device simply does not do anything.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to manage mobility prior Radio Link Failure in a NarrowBand-Internet of Things NB-loT user equipment (UE) storing a previously received System Information Block information SIB and having a data sessions in a NarrowBand-Internet of Things network, said method comprising the steps of, in the NB-loT user equipment (UE):
- monitoring current transport conditions measurements of current data session connection with a current serving cell (B1) against an investigation threshold (IT(S));
- monitoring a buffer status to evaluate the amount of data still needing to be transferred or received and
- initiating, itself, at the NB-loT user equipment (UE), investigation measurements on neighbor cells (B2,Bi) of the NarrowBand-Internet of Things network as listed in the stored System Information Block when at least the investigation threshold (IT(S)) is crossed prior Radio Link Failure.

2. Method according to claim 1, wherein the investigation measurements are performed during downlink gaps in NB-loT communication frame structure.

3. Method to manage mobility according to one of claims 1 and 2, wherein several investigation thresholds are defined depending on the nature of the service as performed in the current data session.

4. Method to manage mobility according to one of claims 1 to 3, wherein the investigation measurements are initiated only when an evaluated amount of data in the buffer status still needing to be transferred or received is above a buffer status threshold.

5. Method to manage mobility according to claim 4, wherein several buffer status thresholds are defined depending on the nature of the service as performed in the current data session.

6. Method to manage mobility according to one of claims 1 to 5, comprising further steps of, for the user equipment, determining internally a re-establishment target cell (B2) in case of Radio Link Failure occurs to current serving cell (B1) depending on investigation measurements on neighbor cells (B2,Bi), and, for the user equipment (UE), sending to the serving cell (B1) an information on the re-establishment target cell (B2).

7. Method to manage mobility according to claim 6, further comprising a step of, for the serving cell (B1), indicating to the user equipment (B1), that the re-establishment target cell (B2) is not a suitable candidate for re-establishment.

8. Method to manage mobility according to claim 7, further comprising a step of, for the user equipment (UE), resuming the neighbor cell search for a suitable candidate in case a non-suitable indication was provided by the serving cell for the information on the re-establishment target cell (B2).

9. Method to manage mobility according to claim 6, further comprising a step of, for the user equipment (UE), sending a user equipment identifier (ID(UE)) to the re-establishment target cell (B2) for subsequent establishment of a data session with the target cell (B2).

10. Method to manage mobility according to claim 9, further comprising a step of, for the user equipment (UE), sending a communication context including already correctly received or transmitted packets to the re-establishment target cell (B2) for subsequent establishment of a data session with the target cell (B2).

11. Method to manage mobility according to one of claims 9 and 10, comprising a step of, for the user equipment (UE), sending a Radio Ressource Control connection re-establishment request to the target reestablishment cell (B2) with a cause "Radio Link Failure" for reestablishing communication in the NB-loT network for the user equipment (UE).

12. Method to manage mobility according to one of preceding claims, where transport conditions measurements comprises measurements of at least one of the following parameters:
a. delay-tolerance of the ongoing service
b. QoS degradation of the current connection
c. User equipment (UE) mobility speed.
d. applied CE level/number of repetitions
e. CE level change
f. re-transmission rate
g. a configuration value provided by the network considering the amount of overlap the current serving cell (B1) has to its neighbor cells.

13. Method to monitor mobility according to one of preceding claims, wherein it comprises the following steps, preliminarily to the establishment of the data session, of, for the serving cell (B1):
- determining an investigation threshold (IT(S)) for the data session;
- sending the determined investigation threshold (IT(S)) in the system information block to the user equipment (UE); and, for the user equipment (UE),
- reading the investigation threshold (IT(S)) to be used for the data session.

14. NarrowBand-Internet of Things NB-loT User Equipment (UE) storing a previously received System Information Block information SIB and being suitable to establish data sessions in a NarrowBand-Internet of Things network and to manage mobility prior Radio Link Failure, said NB-loT user equipment (UE) comprising:
a network measurement module to perform current transport conditions measurements of current data session connection with a current serving cell (B1) against an investigation threshold (IT(S)) and investigation measurements on neighbor cells (B2,Bi);
a buffer status register to evaluate the amount of data still needing to be transferred or received
a mobility management module suitable to:
monitor current transport conditions measurements of current data session connection with a current serving cell (B1) against an investigation threshold (IT(S));
monitor a buffer status to evaluate the amount of data still needing to be transferred or received and
initiate, itself, at the NB-loT user equipment (UE), investigation measurements on neighbor cells (B2,Bi) of the NarrowBand-Internet of Things network as listed in the stored System Information Block when at least the investigation threshold (IT(S)) is crossed prior Radio Link Failure.
